(19) Europäisches Patentamt

European Patent Office

Office européen des brevets

(11) Veröffentlichungsnummer: **0 159 358**

**B1**

(12) **EUROPÄISCHE PATENTSCHRIFT**

(45) Veröffentlichungstag der Patentschrift:
21.09.88

(21) Anmeldenummer: 84903952.4

(22) Anmeldetag: 25.10.84

(86) Internationale Anmeldenummer:
PCT/DE 84/00221

(87) Internationale Veröffentlichungsnummer:
WO 85/01974 (09.05.85 Gazette 85/11)

(51) Int. Cl.⁴: **E 03 F 7/00,** E 03 F 5/10

(54) **REGELVORRICHTUNG FÜR DEN ABFLUSS EINER FLÜSSIGKEIT AUS EINEM BEHÄLTER.**

(30) Priorität: 26.10.83 DE 3338793
27.09.84 DE 3435450

(43) Veröffentlichungstag der Anmeldung:
30.10.85 Patentblatt 85/44

(45) Bekanntmachung des Hinweises auf die Patenterteilung:
21.09.88 Patentblatt 88/38

(84) Benannte Vertragsstaaten:
AT BE CH DE FR GB LI LU NL SE

(56) Entgegenhaltungen:
CH-A-384 230
DE-A-2 523 942
DE-C-438 667
GB-A-484 617

(73) Patentinhaber: Steinhardt, Lothar, Dipl.- Ing.,
Panoramastrasse 44, D-6204 Taunusstein 2 (DE)
Patentinhaber: Giehl, Klaus Ulrich, Dipl.- Ing. (FH),
Lindenstrasse 26, D-5239 Heimborn (DE)

(72) Erfinder: GIEHL, Klaus Ulrich, Lindenstrasse 26,
D-5239 Heimborn (DE)

(74) Vertreter: Quermann, Helmut, Dipl.- Ing., Postfach
6145 Gustav- Freytag- Strasse 25, D-6200
Wiesbaden (DE)

EP 0 159 358 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft eine Regelvorrichtung für den Abfluß einer Flüssigkeit aus einem Behälter mit einer Ablauföffnung, bestehend aus einem, um eine Drehachse schwenkbar gelagerten und den Öffnungsquerschnitt dieser Ablauföffnung in regelnder Weise verschließenden Drosselorgan (vgl. z. B. DE-A-2 523 942).

Ziel der vorliegenden Erfindung ist eine Regelvorrichtung, die sich durch eine kompakte Bauweise bei gleichzeitig geringem Wartungsaufwand auszeichnet.

Dieses Ziel wird mit einer Regelvorrichtung erreicht, bei der das Drosselorgan bewegungsschlüssig mit einem vom Wasserdruck beaufschlagten Druckaufnehmer verbunden ist, der bei steigendem Wasserdruck dieses Drosselorgan in den Öffnungsquerschnitt dieser Ablauföffnung führt.

Das Drosselorgan kann auch starr mit dem Druckaufnehmer verbunden sein.

Vorzugsweise ist die Regelvorrichtung in einem Drosselraum angeordnet, der aus einem einseitig zur Atmosphäre offenen Stellbereich und einem Ablaufbereich besteht. Das Drosselorgan bildet zusammen mit dem, mit dem Drosselorgan starr verbundenen Druckaufnehmer einen kompakten Baukörper. Der Druckaufnehmer ist mit diesem Drosselorgan in einem solchen Winkel verbunden, daß der Druckaufnehmer in jeder Stellung des Drosselorgans mit seiner Außenkontur dichtend entlang einer ihm entsprechenden Innenkontur des Stellbereichs geführt ist.

Derartige Regelvorrichtungen werden überall dort verwendet, wo bei unterschiedlichen Zuflußmengen die Abflußmenge aus einem Behälter geregelt werden soll. Die vorliegende Erfindung ist somit nicht nur für den Einsatz in Regenrückhaltebecken, sondern beispielsweise für den Einsatz in Molkereien und Brauereien geeignet.

Die erfindungsgemäße Regelvorrichtung zeichnet sich durch minimalen Raumbedarf, geringe Anzahl bewegter bzw. unbewegter Bauteile, verhältnismäßig geringe Herstellungskosten und hohe Betriebssicherheit aus. Wegen des geringen Raumbedarfs kann die erfindungsgemäße Regelvorrichtung auch in verhältnismäßig kleinen Regenwasserrückhaltebecken oder ähnlichen Behältern Verwendung finden. Sie kann auch nachträglich, z. B. in ein Gehäuse verkleidet, in bestehende Becken oder Behälter eingebaut werden. Weiterhin bringt es der konstruktive Aufbau und der vorgesehene Anbringungsort - im Bereich des Behälterbodens - mit sich, daß die erfindungsgemäße Regelvorrichtung nicht anfällig ist für Ablagerungen von Festteilen.

Der als Stellglied für das Drosselorgan wirkende Druckaufnehmer sowie das Drosselorgan selbst können unterschiedlich ausgeführt sein.

Bevorzugte Ausführungsformen der Erfindung sind Gegenstand der Unteransprüche.

So kann der Druckaufnehmer an einer senkrecht zur Ablaufrichtung verlaufenden Schwenkwelle befestigt sein, die die Drosselklappe betätigt. Im Fall dieser Ausgestaltung wirkt der hydrostatische Wasserdruck auf den Druckaufnehmer einerseits und auf die Drosselklappe andererseits.

Nach einer anderen Ausgestaltung der Vorrichtung kann der Druckaufnehmer an einer parallel zur Ablaufrichtung verlaufenden Schwenkwelle befestigt sein, wobei an einem und/oder anderen Ende der Schwenkwelle eine senkrecht zur Ablauföffnung geführte Drosselplatte bewegungsschlüssig angebracht ist. Diese Ausführungsform ermöglicht die Unterbringung der erfindungsgemäßen Regelvorrichtung beispielsweise in einer Wandaussparung der Beckenwand.

Ferner ist eine Ausführungsform gemäß dem Vorschlag nach Anspruch 6 möglich, bei der der Druckaufnehmer von einem Druckkolben gebildet ist, der in einem dem Druckkolben querschnittsmäßig angepaßten Stellraum längsbeweglich geführt ist. Über geeignete Antriebsmittel, z. B. Gestänge, wirkt der erwähnte Druckkolben auf eine geeignete Drosselplatte ein. Das dem Wasserdruck entgegenwirkende Kompensationsglied ist vorzugsweise als ein an sich bekanntes, zweckmäßig verstellbares Gegengewicht ausgeführt, so daß gemäß Anspruch 7 der Druckaufnehmer mit einem verstellbaren Gegengewicht belastet ist. Das Kompensationsglied kann dabei auch von einer geeigneten mechanischen und/oder hydropneumatischen Feder mit einer vorgegebenen, individuellen und ggf. einstellbaren Federcharakteristik gebildet sein.

Gemäß dem Anspruch 9 der erfindungsgemäßen Vorrichtung kann die Drosselklappe als Hohlkörper ausgebildet sein, wobei die dem Druckaufnehmer zugekehrte Wandung dieser Drosselklappe in ihrer Fläche größer als die regelnde Fläche der Drosselklappe bzw. mindestens gleich oder größer als die druckbeaufschlagte Fläche des Druckaufnehmers ist, die der Ablauföffnung zugekehrte Wandung der Drosselklappe mit einem vorgelagerten Zulaufkanal zum Hohlkörper versehen ist, und wobei an einer Stelle, die im wesentlichen gegenüber der Eintrittsöffnung dieses Zulaufkanals in diesem Hohlkörper liegt, eine Entleerungsöffnung angeordnet ist.

Diese Ausgestaltung hat den Vorteil, daß sich im Fall einer Verstopfung der Restöffnung der Ablauföffnung sich der Hohlkörper mit Flüssigkeit füllt, so daß sich die Gleichgewichtsbedingungen an dem Regelsystem verändern und sich die Drosselklappe von selbst wieder öffnet, was zu einer selbsttätigen Beseitigung der Verstopfung führt.

Desweiteren kann nach Anspruch 10 der Vorrichtung der Druckaufnehmer als

Hohlwalzensegment ausgebildet sein. Dadurch ist es möglich, die Dichtung um die zur Atmosphäre weisende Öffnung umlaufend an der Stellraumwand unterzubringen, wodurch sich die Herstellung und Wartung noch weiter vereinfachen.

Gemäß einer weiteren Ausführungsform weist der Drosselraum einen dem Stellbreich in Strömungsrichtung nachgelagerten Hohlraum auf, der gegen den Stellbereich durch den Druckaufnehmer, in Strömungsrichtung durch eine senkrecht zur Ablaufrichtung angeordnete Wandung und gegen den Ablaufbereich durch eine im wesentlichen horizontal in Höhe der Schwenkwelle angeordnete Wandung abgegrenzt ist, wobei diese Wandung mit dieser Wandung und dieser Schwenkwelle verbunden ist und diese Entleerungsöffnung aufweist. Der als Hohlwalzensegment ausgeführte Druckaufnehmer ist zu diesem Hohlraum hin offen. Entgegen der Strömungsrichtung ist dieser Drosselklappe der Zulaufkanal zu diesem Hohlwalzensegment vorgelagert.

Anhand der Figuren 1 bis 7 wird die Erfindung im folgenden an vier Ausführungsbeispielen näher erläutert.

Es zeigen:

Figur 1 eine Ausführungsform der erfindungsgemäßen Regelvorrichtung in der Ansicht,

Figur 2 die Vorrichtung nach Figur 1 in der Draufsicht,

Figur 3 eine andere Ausführungsform der erfindungsgemäßen Regelvorrichtung in der Seitenansicht im Schnitt entsprechend Schnittlinie AA in Figur 4,

Figur 4 die Vorrichtung nach Figur 3 in der Vorderansicht und

Figur 5 die Vorrichtung nach Figur 3 ebenfalls in der Vorderansicht und mit von der Stellung der Drosselklappe im Fall der Darstellung in Figur 4 abweichender Stellung der Drosselklappe der Vorrichtung,

Figur 6 eine andere Ausführungsform des Druckaufnehmers der erfindungsgemäßen Regelvorrichtung in der Seitenansicht im Schnitt analog zur Figur 3,

Figur 7 eine weitere Ausführungsform der erfindungsgemäßen Regelvorrichtung in der Seitenansicht.

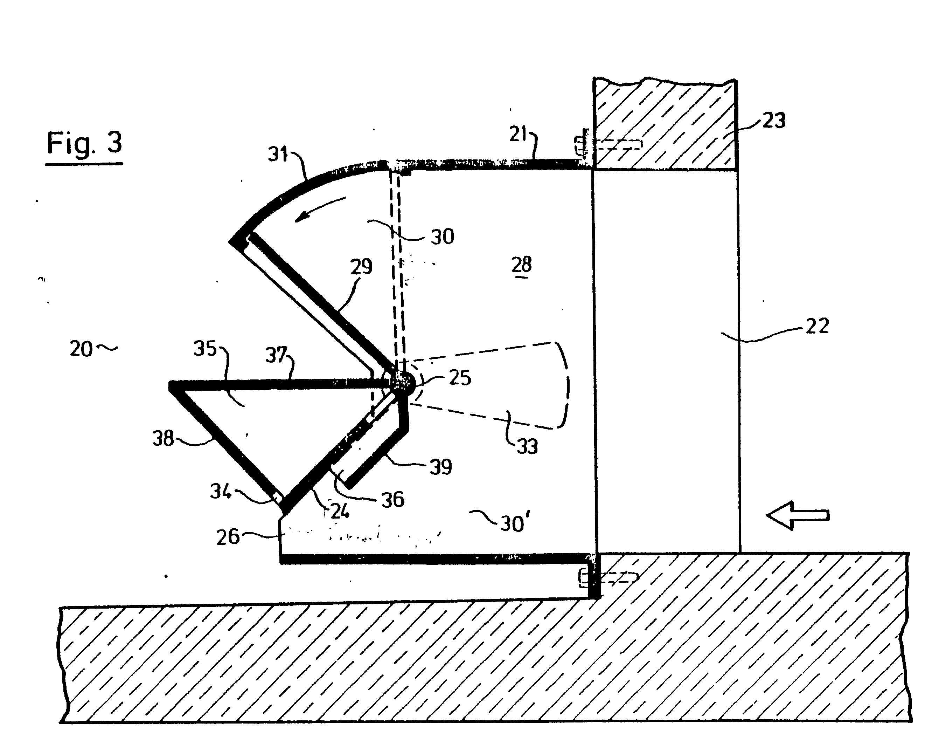

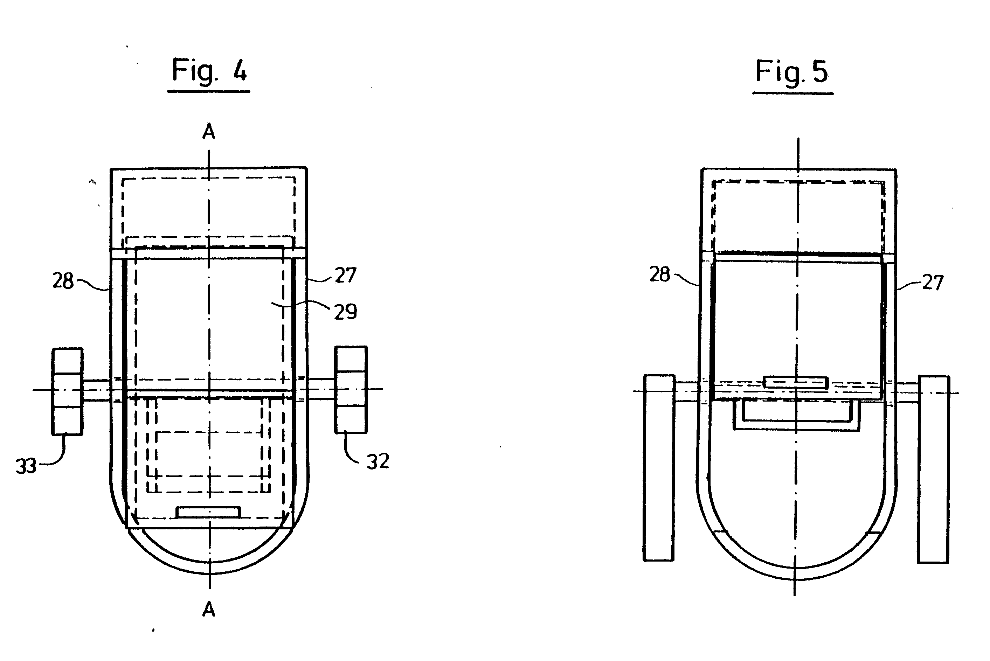

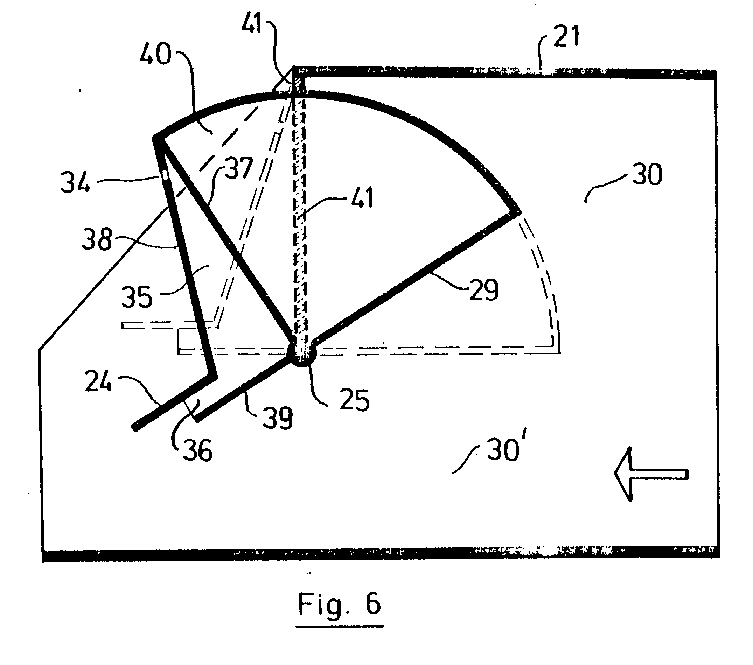

Die Darstellungen nach den Figuren 3 bis 6 zeigen eine bevorzugte Ausführungsform der erfindungsgemäßen Regelvorrichtung. Die allgemein mit 20 bezeichnete Regelvorrichtung besteht aus einem Drosselraum 21, der im oberen Bereich als Stellbereich 30 und im unteren Bereich als Ablaufbereich 30′ mit der Ablauföffnung 26 ausgebildet ist, die im Anschluß an eine Auslauföffnung 22 eines Behälters 23 an diesem befestigt ist. Im Bereich des dem Behälter 23 abgekehrten Endes des Drosselraums 21 ist eine Drosselklappe 24 angeordnet, die an einer Schwenkwelle 25 befestigt ist. Die Drosselklappe 24 verschließt in der in den Figuren 3 und 4 dargestellten Lage im wesentlichen - bis auf eine Restöffnung - eine Auslauföffnung 26 des Drosselraums 21.

Die Schwenkwelle 25 ist in seitlichen Wandungen 27 und 28 des Drosselraums 21 schwenkbar gelagert und verläuft parallel zur Ebene der Drosselklappe 24. Außerdem ist an der Schwenkwelle 25 der Druckaufnehmer 29 starr befestigt, der innerhalb eines vorgegebenen Schwenkbereichs im oberen Teil des Drossel raums 21, dem mit 30 bezeichneten Stellbereich, schwenkbar gelagert ist. Der Stellbereich 30 wird begrenzt von Wandungsteilen der seitlichen Wandungen 27 und 28 sowie einer gekrümmt verlaufenden Wandung 31.

An den beiden Enden der Schwenkwelle 25 sind Gegengewichte 32 bzw. 33 befestigt.

Ferner ist beispielsweise für den Fall der Ausführungsform nach den Figuren 3 bis 6 die Drosselklappe 24 noch ergänzt durch einen bis auf eine Öffnung 34 abgeschlossenen Raum 35 mit vorgelagertem Zulaufkanal 36. Der Raum 35 wird gebildet durch zusätzliche Wandungen 37 und 38 in Verbindung mit der Drosselklappe 24; der Zulaufkanal wird durch einen Abschnitt der Drosselklappe 24 zusammen mit einer zusätzlichen Wandung 39 gebildet.

Die Wirkungsweise der Regelvorrichtung nach den Figuren 3 bis 6 ist wie folgt:

Im Fall ansteigenden Wasserstandes bzw. Wasserdruckes im Behälter 23 wird der Druckaufnehmer 29 aus der in Figur 3 gestrichelt dargestellten Lage entgegen der Wirkung der Gegengewichte 32 und 33 mehr oder weniger entsprechend dem Flüssigkeitsdruck in pfeilrichtung bewegt. Hierdurch wird die Drosselklappe auf die Auslauföffnung 26 zu bewegt und verschließt diese in zunehmendem Maße, bis sich ein Gleichgewichtszustand zwischen den entgegengesetzt wirkenden Kräften, nämlich den auf den Druckaufnehmer 29 und den auf die Drosselklappe 24 in Verbindung mit den Gegengewichten 32 und 33 wirkenden Wasserdruck andererseits eingestellt. Die im Fall der Ausführungsform nach den Figuren 3 bis 6 vorgesehene Ergänzung durch den erwähnten Raum 35 mit Zulaufkanal 36 bewirkt, daß im Fall eines immerhin möglichen Verstopfens der Restöffnung der Ablauföffnung 26, die Regelvorrichtung selbsttätig dafür sorgt, daß eine derartige Verstopfung des Abflusses wieder beseitigt wird.

Der aus der Auslauföffnung 26 austretende Wasserstrahl erzeugt einen Sog, der einen Wassereintritt durch den Zulaufkanal 36 in den Raum 35 verhindert.

Tritt eine Verstopfung an der Auslauföffnung 26 ein, so reißt der Sog des austretenden Wasserstrahls ab, wobei nun über den statischen Wasserdruck das Wasser über den Zulaufkanal 36 in den Raum 35 eindringt. Da die Fläche der Wandung 37 größer ist als die Fläche der Drosselklappe 24, wirkt bei gefülltem Raum 35 entsprechend dem herrschenden statischen Druck ein größerer Gegendruck als zuvor über die Schwenkwelle 25 auf den Druckaufnehmer 29 ein.

Dadurch wird der ursprüngliche Gleichgewichtszustand verändert, wobei die Drosselklappe 24 die Auslauföffnung 26 wieder vergrößert und somit die Verstopfung löst.

Nach Lösen bzw. Beseitigen der Verstopfung stellt sich an der Auslauföffnung 26 wieder der ursprüngliche Gleichgewichtszustand ein; der Sog des austretenden Wasserstrahls verhindert ein Eindringen von Wasser in den Raum 35 und der Raum 35 entleert sich über die Öffnung 34. Die selbsttätige Regelung wirkt danach wieder wie zuvor.

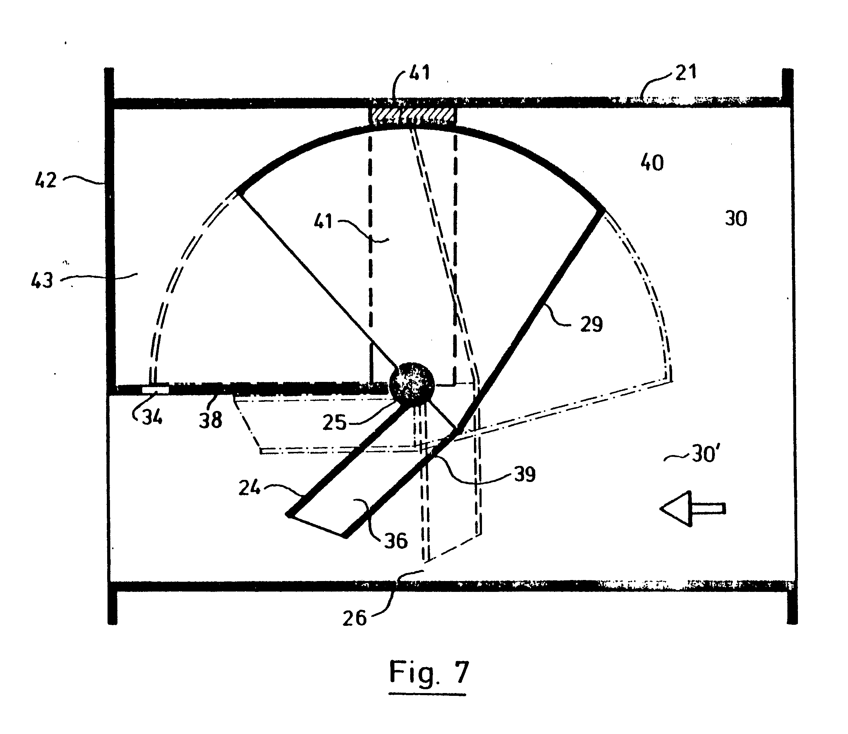

Die Figur 7 zeigt eine Abwandlung der bisher beschriebenen Ausführungsform. Auch hier besteht der Druckaufnehmer 29 aus einem Hohlwalzen segment 40. Im Gegensatz zur vorangegangenen Ausführungsform ist das Hohlwalzensegment gegen einen weiteren Hohlraum 43 hin offen. Dieser Hohlraum 43 ist dem Stellbereich 30 vorgelagert und wird von diesem durch den Druckaufnehmer 29 abgetrennt. Weitere Begrenzungen dieses Hohlraums 43 werden durch die vertikale Wandung 43 und die horizontal in Höhe der Schwenkwelle 25 angeordnete Wandung 38 gebildet. Letztere weist die Öffnung 34 auf. Die Wandung 38 ist so angeordnet, daß sie als Anschlag für das Hohlwalzensegment 40 bei vollständig gefülltem Behälter und als Anschlag für die Drosselplatte 24 bei leerem Behälter dient.

Der Drosselklappe 24 ist der durch die zusätzliche Wandung 39 gebildete Zulaufkanal 36 vorgelagert, der in das Hohlwalzensegment 40 führt.

Eine Dichtung 41 ist derart umlaufend in der Stellbereichswand angebracht, daß der Druckaufnehmer mit seiner Außenkontur an dieser Dichtung entlang geführt wird.

Diese Ausgestaltung hat den Vorteil, daß sich im Fall einer Verstopfung der Restöffnung der Ablauföffnung 26 durch den Zulaufkanal 36 Flüssigkeit in den dem Druckaufnehmer 29 vorgelagerten Hohlkörper 43 eindringt, die dem Druckaufnehmer entgegenwirkt, durch die sich die Gleichgewichtsbedingungen an dem Regelsystem verändern und die Drosselklappe 24 von selbst wieder öffnet, was zu einer selbsttäigen Beseitigung der Verstopfung führt.

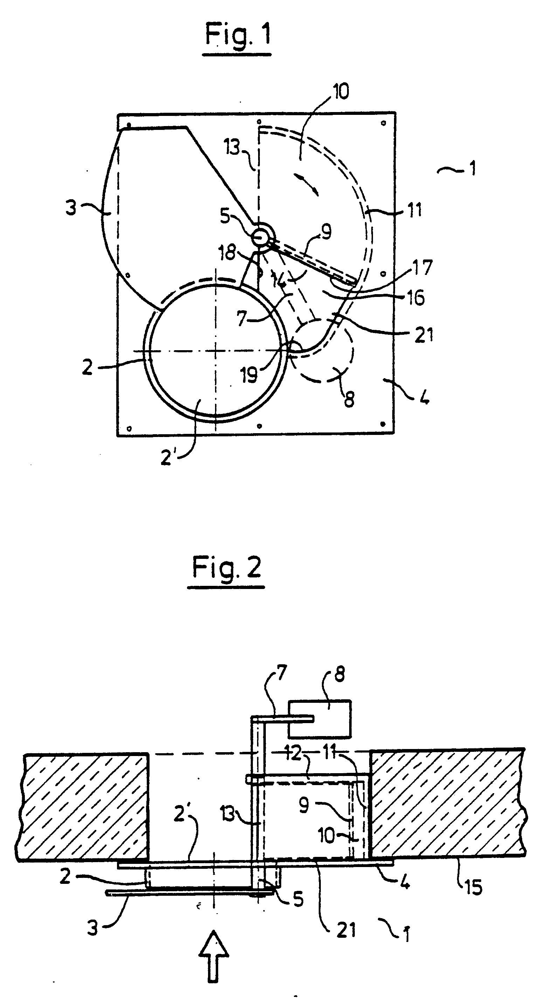

Die Darstellungen nach den Figuren 1 und 2 zeigen eine andere mögliche Ausführungsform der erfindungsgemäßen Regelvorrichtung.

Der Drosselraum 21 dieses Ausführungsbeispiels der allgemein mit 1 bezeichneten Regelvorrichtung weist einen Ablaufbereich 2 auf, der als Rohrstutzen ausgeführt ist und vor einer entsprechenden Öffnung 2' in einer Trägerplatte 4 befestigt ist. An der Trägerplatte 4 ist eine Schwenkwelle 5 drehbar gelagert, die am einen Ende die Drosselplatte 3 trägt und die am anderen Ende einen Arm 7 mit einem Gegengewicht 8 aufweist. Das Gegengewicht 8 ist zweckmäßig am Arm 7 längsverstellbar befestigt.

An der Schwenkwelle 5 ist außerdem der Druckaufnehmer 9 starr befestigt, der in einer zur Ebene der Drosselplatte 3 senkrechten Ebene liegt. Der Druckaufnehmer 9 liegt in einem Stellraum 10, der von Wandungen 11 und 12 sowie dem betreffenden Wandungsteil der Trägerplatte 4 gebildet wird. Die Wandung 11 ist gekrümmt ausgeführt entsprechend dem bogenförmig verlaufenden Bewegungsbereich des Druckaufnehmers 9, während die Wandung 12 parallel zum betreffenden Wandungsteil der Trägerplatte 4 verläuft. Der von den erwähnten Wandungen bzw. Wandungsteilen gebildete Stellbereich 10 ist am einen, mit 13 bezeichneten Ende zur äußeren Atmosphäre hin offen, während das mit 14 bezeichnete Ende des Stellbereichs 10 zum Innern eines mit 15 bezeichneten Behälters, z. B. eines Regenwasserrückhaltebeckens, hin offen ist. An das dem Behälter 15 zugekehrte Ende 14 des Stellbereichs 10 schließt sich eine in der Trägerplatte 4 befindliche Ausnehmung 16 an. Die Ausnehmung 16 wird begrenzt von Kanten 17, 18 und 19. Die Kante 17 verläuft im Fall der einen, in der Zeichnung dargestellten Endstellung des Druckaufnehmers 9 bzw. der Drosselplatte 3 etwa parallel zur Ebene des Druckaufnehmers 9 und jedenfalls so, daß der dem Behälterinnern abgekehrte Teil des Stellbereichs 10 von dem Druckaufnehmer 9 gegenüber dem Behälter 15 praktisch dichtend abgeschlossen ist.

Die Wirkungsweise der Regelvorrichtung nach Figur 1 und 2 wird im folgenden beschrieben.

Im Fall ansteigenden Wasserstandes im Behälter 15 wird - entsprechend dem jeweiligen Wasserstand - ein bestimmter Druck auf den Druckaufnehmer 9 der Regelvorrichtung 1 vom Wasser bzw. der betreffenden Flüssigkeit ausgeübt. Dieser, den äußeren atmosphärischen Druck mehr oder weniger übersteigende innere Druck wird eine Bewegung, nämlich ein Verschwenken des Druckaufnehmers 9 in Richtung auf das der Atmosphäre zugekehrte Ende 13 des Stellraumes 10 bewirken. Der betreffenden Schwenkbewegung des Druckaufnehmers 9 folgt die Drosselplatte 3, so daß bei ansteigendem Wasserstand die Drosselplatte mehr oder weniger die Ablauföffnung 2' verschließt. Dabei wird die Verstellung bzw. Verschwenkung des Druckaufnehmers 9 je nach Flüssigkeitsstand in einem solchen Ausmaß erfolgen, daß sich die einander entgegenwirkenden, einerseits vom Wasser im Behälter 15 und andererseits vom Gegengewicht 8 auf die Schwenkwelle 5 einwirkenden Kräfte ausgleichen. Grundsätzlich ist die Anordnung so getroffen, daß die Wirkung des Gegengewichtes 8 dabei und im Hinblick auf anwachsenden Wasserstand sinusförmig zunimmt. Allerdings ist es auch möglich, das Gegengewicht oder Teile des Gegengewichts erst nach und nach im Verlaufe der insgesamt möglichen Schwenkbewegung des Druckaufnehmers 9 zur Wirkung kommen zu lassen und/oder weitere Kompensationsglieder zur Erzeugung der notwendigen Gegenkraft zu verwenden, z. B. mechanische oder hydropneumatische Federn mit geeigneter Federcharakteristik.

**Patentansprüche**

1. Regelvorrichtung für den Abfluß einer Flüssigkeit aus einem Behälter mit einer Ablauföffnung, bestehend aus einem, um eine Drehachse schwenkbar gelagerten und den Öffnungsquerschnitt dieser Ablauföffnung in regelnder Weise verschließenden Drosselorgan, dadurch gekennzeichnet, daß dieses Drosselorgan (3 oder 24) bewegungsschlüssig mit einem vom Wasserdruck beaufschlagten Druckaufnehmer (9 oder 29) verbunden ist, der bei steigendem Wasserdruck dieses Drosselorgan in den Öffnungsquerschnitt dieser Ablauföffnung (2', 26) führt.

2. Regelvorrichtung nach Anspruch 1, dadurch gekennzeichnet, daß dieses Drosselorgan (3 oder 24) starr mit diesem Druckaufnehmer (9 oder 29) verbunden ist.

3. Regelvorrichtung nach Anspruch 1 oder 2, dadurch gekennzeichnet, daß sie in einem Drosselraum (21) angeordnet ist, der aus einem einseitig zur Atmosphäre offenen Stellbereich (10, 30) und einem Ablaufbereich (2, 30) besteht, und daß dieses Drosselorgan (3 oder 24) zusammen mit dem, mit dem Drosselorgan bewegungsschlüssig verbundenen Druckaufnehmer (9 oder 29) einen kompakten Baukörper bildet, wobei dieser Druckaufnehmer mit diesem Drosselorgan in einem solchen Winkel verbunden ist, daß der Druckaufnehmer in jeder Stellung des Drosselorgans mit seiner Außenkontur dichtend entlang einer ihm entsprechenden Innenkontur des Stellbereichs (10 oder 30) geführt ist.

4. Vorrichtung nach einem der Ansprüche 1 bis 3, dadurch gekennzeichnet, daß der Druckaufnehmer (9) an einer parallel zur Ablaufrichtung verlaufenden Schwenkwelle (5) befestigt ist, wobei am einen und/oder anderen Ende der Schwenkwelle (5) eine den Ablaufquerschnitt abblendende Drosselplatte (3) bewegungsschlüssig befestigt ist.

5. Vorrichtung nach einem der Ansprüche 1 bis 3, dadurch gekennzeichnet, daß der Druckaufnehmer (29) an einer senkrecht zur Ablaufrichtung verlaufenden Schwenkwelle (25) befestigt ist, an der eine Drosselklappe (24) bewegungsschlüssig befestigt ist.

6. Vorrichtung nach einem der Ansprüche 1 bis 3, dadurch gekennzeichnet, daß der Druckaufnehmer von einem Druckkolben gebildet ist, der in einem dem Druckkolben querschnittsmäßig angepaßten Stellbereich längsbeweglich geführt ist.

7. Vorrichtung nach einem der Ansprüche 1 bis 6, dadurch gekennzeichnet, daß der Druckaufnehmer (9, 29) mit einem verstellbaren Gegengewicht (8, 32, 33) belastet ist.

8. Vorrichtung nach einem der Ansprüche 1 bis 6, dadurch gekennzeichnet, daß der Druckaufnehmer (9, 29) über eine einstellbare Feder belastet ist.

9. Vorrichtung nach einem der Ansprüche 5 bis 8, dadurch gekennzeichnet, daß die Drosselklappe (24) als Hohlkörper (35) ausgebildet ist, wobei die dem Druckaufnehmer (29) zugekehrte Wandung (37) dieser Drosselklappe (24) in ihrer Fläche größer als die regelnde Fläche der Drosselklappe (24) bzw. mindestens gleich oder größer als die druckbeaufschlagte Fläche des Druckaufnehmers (29) ist, daß die der Ablauföffnung (26) zugekehrte Wandung der Drosselklappe (24) mit einem vorgelagerten Zulaufkanal (36) zum Hohlkörper versehen ist, und daß an einer Stelle, die im wesentlichen gegenüber der Eintrittsöffnung dieses Zulaufkanals in diesen Hohlkörper (35) liegt, eine Entleerungsöffnung (34) angeordnet ist.

10. Vorrichtung nach einem der Ansprüche 1 bis 5 oder 7 bis 9, dadurch gekennzeichnet, daß der Druckaufnehmer (29) ein Hohlwalzensegment (40) ist, dessen äußerer Radius die lichte Weite des Stellbereichs (30) über der Drehachse (25) ist, und daß eine Dichtung (41) umlaufend in der Stellbereichwand angebracht ist.

11. Vorrichtung nach einem der Ansprüche 1 bis 3 oder 5 bis 8 oder 10, dadurch gekennzeichnet, daß dieser Drosselraum (21) einen dem Stellbereich (30) in Strömungsrichtung nachgelagerten Hohlraum (43) aufweist, der gegen den Stellbereich (30) durch den Druckaufnehmer (29), in Strömungsrichtung durch eine senkrecht zur Ablaufrichtung angeordnete Wandung (42) und gegen den Ablaufbereich durch eine im wesentlichen horizontal in Höhe der Schwenkwelle (25) angeordnete Wandung (38) abgegrenzt ist, wobei diese Wandung (38) mit dieser Wandung (42) und dieser Schwenkwelle (25) verbunden ist und diese Entleerungsöffnung (34) aufweist, daß der als Hohlwalzensegment (40) ausgeführte Druckaufnehmer (29) zu diesem Hohlraum (43) hin offen ist, und daß dieser Drosselklappe (24) entgegen der Strömungsrichtung der Zulaufkanal (36) zu diesem Hohlwalzensegment (40) vorgelagert ist.

**Claims**

1. Device for regulating the flow of a fluid from a container with a run-off opening, comprising a flow restrictor pivotably mounted on a swivelling axis and regulatively obturating the opening area of said run-off opening,
characterised in that said flow restrictor (3 or 24) is connected to be fast with a pressure sensor (9 or 29) actuated by the water pressure, said pressure sensor guiding said flow restrictor into the aperture of said run-off opening (2', 26) whenever the water pressure rises.

2. Regulating device according to Claim 1, characterized in that the flow restrictor (3 or 24) is rigidly connected to the pressure sensor (9 or 29).

3. Regulating device according to Claim 1 or 2, characterised by being disposed in a flow restriction compartment (21) comprising a control zone (10, 30) open on one side to the atmosphere, and a run-off zone (2, 30), and that said flow restrictor (3 or 24) forms a compact unit along with the pressure sensor (9 or 29) connected to be fast with the flow restrictor, said pressure sensor being connected to said flow restrictor at an angle such that whatever the position of the flow restrictor, the external profile of the pressure sensor fits snugly along a corresponding internal profile of the control zone (10 or 30).

4. Device according to one of Claims 1 to 3, characterized in that the pressure sensor (9) is mounted on a swivelling shaft (5) which extends parallel to the run-off direction, and at one and/or other end of the swivelling shaft (5) a flow restriction plate (3) which occludes the run-off opening is mounted to be fast therewith.

5. Device according to one of Claims 1 to 3, characterized in that the pressure sensor (29) is mounted on a swivelling shaft (25) which extends perpendicular to the run-off direction, and a flow restriction valve (24) is mounted on said swivelling shaft to be fast therewith.

6. Device according to one of Claims 1 to 3, characterized in that the pressure sensor is formed by a pressure piston disposed so as to be moveable lengthways in a control zone whose cross-section is adapted to that of the pressure piston.

7. Device according to one of Claims 1 to 6, characterized in that the pressure sensor (9, 29) is loaded with an adjustable counterweight (8, 32, 33).

8. Device according to one of Claims 1 to 6, characterized in that the pressure sensor (9, 29) is loaded by means of a variable spring.

9. Device according to one of Claims 5 to 8, characterized in that the flow restriction valve (24) is constructed as a hollow body (35), the wall (37) of said flow restriction valve (24) that is nearest the pressure sensor (29) having a larger surface area than the regulating surface area of the flow restriction valve (24) or at least equal to or greater than the pressurised surface area of the pressure sensor (29), that the wall of the flow restriction valve (24) that is nearest the run-off opening (26) is provided with an inflow channel (36) to the hollow body, and that at a point substantially opposite the inlet opening of said inflow channel into said hollow body (35) there is arranged a drain opening (34).

10. Device according to one of claims 1 to 5 or 7 to 9, characterized in that the pressure sensor (29) is a hollow rolled segment (40) the external radius of which is the clearance of the control zone (30) over the swivel axis (25), and that a seal (41) is fitted circumferentially in the wall of the control zone.

11. Device according to one of Claims 1 to 3 or 5 to 8 or 10, characterized in that the flow restriction compartment (21) exhibits a hollow space (43) positioned after the control zone (30) in the direction of flow, said hollow space being delimited from the control zone (30) by the pressure sensor (29), in the flow direction by a wall (42) disposed perpendicular to the run-off direction, and from the run-off zone by a wall (38) disposed substantially horizontally at the level of the swivelling shaft (25), said wall (38) being connected to said wall (42) and said swivelling axis (25) and exhibiting said drain opening (34), that the pressure sensor (29) in the form of said hollow rolled segment (40) is open towards said hollow space (43), and that said flow restriction valve (24) is positioned before the inflow channel (36) to said hollow rolled segment (40) in the opposite direction to the direction of flow.

**Revendications**

1. Dispositif de réglage pour l'écoulement d'un fluide à partir d'un récipient, avec un orifice d'écoulement et se composant d'un organe d'étranglement guidé de manière pivotante autour d'un axe de rotation et obturant la section de cet orifice d'écoulement d'une manière assurant une régulation, caractérisé en ce que cet organe d'étranglement (3 ou 24) est relié en mouvement à un enregistreur de pression (9 ou 29), qui est soumis à la pression de l'eau, qui guide cet organe d'étranglement dans la section d'orifice de cet orifice d'écoulement (2', 26) lorsque la pression d'eau s'accroit.

2. Dispositif de réglage selon la revendication 1, caractérisé en ce que cet organe d'étranglement (3 ou 24) est rigidement relié à cet enregistreur de pression (9 ou 29).

3. Dispositif de réglage selon la revendication 1 ou 2, caractérisé en ce qu'il est disposé dans une enceinte d'étranglement (21), qui se compose d'une zone de réglage (10, 30) et d'une zone d'écoulement (2, 30) et que cet organe d'étranglement (3 ou 24) qui est relié en mouvement à l'organe d'étranglement, faisant que cet enregistreur de pression est relié à cet organe d'étranglement en faisant un angle tel que l'enregistreur de pression est guidé de manière étanche avec son contour extérieur dans toutes les positions de l'organe d'étranglement, le long d'un contour intérieur de la zone de réglage (10 ou 30) qui lui correspond.

4. Dispositif de réglage selon l'une des revendications 1 à 3, caractérisé en ce que l'enregistreur de pression (9) est fixé sur un arbre pivotant (5) qui se développe parallèlement à la direction d'écoulement, une plaque d'étranglement (3) étant à cette occasion fixée en mouvement sur une extrémité, ou bien l'autre extrémité de l'arbre pivotant (5), en étranglant la section d'écoulement.

5. Dispositif de réglage selon l'une des revendications 1 à 3, caractérisé en ce que

l'enregistreur de pression (29) est fixé sur un arbre pivotant (25) se développant transversalement par rapport à la direction d'écoulement et sur lequel un clapet d'étranglement (24) est fixé en mouvement.

6. Dispositif de réglage selon l'une des revendications 1 à 3, caractérisé en ce que l'enregistreur de pression est formé d'un piston à pression, qui est guidé de manière mobile longitudinalement, dans une zone de réglage dont la section est adaptée au piston à pression.

7. Dispositif de réglage selon l'une des revendications 1 à 6, caractérisé en ce que l'enregistreur de pression (9, 29) est lesté d'un contrepoids (8, 32, 33) déplaçable.

8. Dispositif de réglage selon l'une des revendications 1 à 6, caractérisé en ce que l'enregistreur de pression (9, 29) est lesté par un ressort réglable.

9. Dispositif de réglage selon l'une des revendications 5 à 8, caractérisé en ce que le clapet d'étranglement (24) est configuré en corps creux (35), la paroi (37) de ce clapet d'étranglement (24) qui est tournée vers l'enregistreur de pression (29) étant, a cette occasion, d'une surface supérieure à la surface de régulation du clapet d'étranglement (24), respectivement au moins identique ou supérieure à la surface de l'enregistreur de pression (29) qui est soumise à la pression et que la paroi du clapet d'étranglement (24) qui est tournée vers l'orifice d'écoulement (26) est pourvue d'un canal d'amenée (36) au corps creux, et qu'un orifice de purge (34) est disposé en un point qui se trouve dans ce corps creux (35), principalement en face de l'orifice d'entrée de ce canal d'amenée.

10. Dispositif de réglage selon l'une des revendications 1 à 5, ou 7 à 9, caractérisé en ce que l'enregistreur de pression (29) est un segment de cylindre creux (40), dont le rayon extérieur constitue la largeur de la zone de réglage (30) au dessus de l'axe de rotation (25) et qu'une étanchéité (41) périphérique est adjointe dans la paroi de la zone de réglage.

11. Dispositif de réglage selon l'une des revendications 1 à 3, ou 5 à 8 ou 10, caractérisé en ce que cette enceinte d'étranglement (21) possède une enceinte creuse (43) qui est placée en aval de la zone de réglage (30) dans la direction de l'écoulement et qui est délimitée face à la zone de réglage (30) par l'enregistreur de pression (29), dans la direction de l'écoulement par une paroi (42) qui est disposée perpendiculairement à la direction de l'écoulement et qui est délimitée face à la zone de réglage, par une paroi (38) qui est disposée principalement horizontalement à hauteur de l'arbre pivotant (25), cette paroi (38) étant, à cette occasion, reliée à cet arbre pivotant (25) et possédant cet orifice de purge (34), en ce que l'enregistreur de pression (29) qui est réalisé en segment de cylindre creux (40) est ouvert vers cette enceinte creuse (34) et que ce clapet d'étranglement (24) est situé devant ce segment de cylindre creux (40), en observant dans le sens contraire à l'écoulement du canal d'écoulement (36).

## Fig. 1

## Fig. 2

Fig. 3

# Fig. 4

# Fig. 5

0 159 358

Fig. 6

0 159 358

Fig. 7